# EUROPÄISCHE PATENTSCHRIFT

(11) **EP 2 640 565 B1**
(45) Veröffentlichungstag und Bekanntmachung des Hinweises auf die Patenterteilung: **10.02.2016**
(21) Anmeldenummer: 11784500.8
(22) Anmeldetag: 18.11.2011
(51) Int. Cl.: B29C 70/38

(54) **VERFAHREN UND FERTIGUNGSEINHEIT ZUR HERSTELLUNG VON FASERVERBUNDMATERIAL-BAUTEILEN**
METHOD AND PRODUCTION UNIT FOR PRODUCING FIBRE COMPOSITE MATERIAL COMPONENTS
PROCÉDÉ ET UNITÉ DE FABRICATION D'ÉLÉMENTS EN MATÉRIAU COMPOSITE RENFORCÉ PAR DES FIBRES

(30) Priorität: 19.11.2010 DE 102010044175
(43) Veröffentlichungstag der Anmeldung: 25.09.2013
(73) Patentinhaber: Brötje-Automation GmbH, 26215 Wiefelstede (DE)
(72) Erfinder: PAUSE, Bernhard, 74821 Mosbach (DE); BOGE, Christian, 74821 Mosbach (DE)
(74) Vertreter: Gottschald, Jan
(86) Internationale Anmeldenummer: PCT/EP2011/070418
(87) Internationale Veröffentlichungsnummer: WO 2012/066109

(56) Entgegenhaltungen:
- WO-A1-2006/118692
- US-A- 5 141 585
- US-A- 5 431 749

## Beschreibung

Die Erfindung betrifft ein Verfahren und eine Fertigungseinheit zur Herstellung von Faserverbundmaterial-Bauteilen.

Aus der EP 2 072 224 A2 ist ein Verfahren zur Herstellung von Faserverbundmaterial-Bauteilen bekannt, bei dem mittels eines Detektionssystems Unregelmäßigkeiten beim Auftragen des Faserverbundmaterials detektiert werden. Zu detektierten Unregelmäßigkeiten wird überprüft, ob diese auf eine Fehlfunktion der zum Schneiden des Faserverbundmaterials vorgesehenen Schneidvorrichtung zurückzuführen sind. Die Funktion der Schneidvorrichtung wird auf diese Weise ständig überwacht. Festgestellte Fehlfunktionen der Schneidvorrichtung werden sofort einem Bediener gemeldet oder zur Unterbrechung des Herstellungsvorgangs genutzt.

Aus der US 5,431,749 A ist ein Faserlegekopf bekannt, der um 180° drehbar an einer Positioniereinrichtung angeordnet ist. Vor einer Anpressrolle ist ein Bandkantensensor angeordnet, der die Kanten eines aufzutragenden Faserbandes vor dem Auftragen misst und ein entsprechendes Ausrichten des Faserbandes ermöglicht.

Aus der WO 2006/118 692 A1 ist eine Vorrichtung zur Herstellung von Faserverbundmaterial-Bauteilen mit einem Faserlegekopf bekannt, bei der die Kante einer zuvor gelegten Bahn mittels eines Sensors detektiert wird.

Der Erfindung liegt die Aufgabe zugrunde, ein Verfahren zu schaffen, das die Herstellung von Faserverbundmaterial-Bauteilen mit einer hohen Produktivität und Qualität ermöglicht.

Diese Aufgabe wird durch ein Verfahren mit den Merkmalen des Anspruchs 1 gelöst. Erfindungsgemäß erfolgt das Auftragen einer Bahn des Faserverbundmaterials auf die Bauteilform in Abhängigkeit eines gemessenen Höhenprofils einer vorher aufgetragenen Bahn des Faserverbundmaterials. Hierzu weist die Fertigungseinheit mindestens einen Höhenprofil-Messsensor auf, der in einem auf die Bauteilform gerichteten Erfassungsbereich, in dem zumindest ein Teil der aufgetragenen Bahn liegt, das Höhenprofil misst. In einem nachfolgenden Auftragsvorgang wird das gemessene Höhenprofil von der Steuereinrichtung zur Ansteuerung mindestens einer der Antriebsmotoren der Positioniereinrichtung genutzt, sodass durch ein entsprechendes Positionieren des Auftragswerkzeugs Auftragsfehler vermieden und/oder bereits bestehende Auftragsfehler vermindert werden. Beispielsweise ist bei seitlich nebeneinander aufzutragenden Bahnen ein Überlappen oder ein zu großer Spalt vermeidbar. Weiterhin sind beispielsweise Höhen- bzw. Dickenunterschiede erfassbar, die in einem nachfolgenden Auftragsvorgang durch Verändern der Anpresskraft des Auftragswerkzeugs verminderbar sind. Das Faserverbundmaterial wird üblicherweise auch als Prepreg oder Laminat bezeichnet. Weiterhin werden die aufgetragenen Bahnen üblicherweise auch als Courses bezeichnet.

Mit dem erfindungsgemäßen Verfahren können somit während des Auftragens Auftragsfehler vermieden und/oder vermindert werden, wodurch bei der Herstellung von Faserverbundmaterial-Bauteilen eine hohe Produktivität in Verbindung mit einer hohen Qualität gewährleistet ist. Insbesondere wird bei dem erfindungsgemäßen Verfahren im Vergleich zu dem aus dem Stand der Technik bekannten Überwachungsverfahren eine erhebliche Steigerung der Produktivität und Qualität erzielt. Dies wird durch eine Steuerung bzw. Regelung des Auftrags der einzelnen Bahnen des Faserverbundmaterials sowie eine Überwachung des jeweiligen Aüftragsvorgangs ermöglicht.

Der mindestens eine Höhenprofil-Messsensor ist vorzugsweise an dem Auftragswerkzeug angeordnet. Da der mindestens eine Höhenprofil-Messsensor dem Auftragswerkzeug vorzugsweise in einer Auftragsrichtung vorgeordnet ist, wird dieser auch als Vorlauf-Sensor bezeichnet. Die Positioniereinrichtung umfasst vorzugsweise einen Roboter, der mindestens vier, insbesondere mindestens fünf, und insbesondere mindestens sechs Schwenkachsen für das Auftragswerkzeug aufweist, die jeweils einen zugehörigen Antriebsmotor haben.

Das Verfahren gewährleistet eine hohe Produktivität. Nach einem Auftragsvorgang kann unmittelbar mit einem neuen Auftragsvorgang in einer entgegengesetzten Auftragsrichtung begonnen werden, indem das Auftragswerkzeug relativ zu der Positioniereinrichtung um 180° gedreht wird. Dadurch, dass zwei Höhenprofil-Messsensoren nebeneinander an dem Auftragswerkzeug angeordnet sind, kann in jeder der beiden Drehstellungen eine Messung des Höhenprofils erfolgen.

Ein Verfahren nach Anspruch 2 gewährleistet eine schnelle und verschleißfreie Messung des Höhenprofils. Lichtschnittsensoren, die mittels eines auch als Triangulationsverfahren bezeichneten Lichtschnittverfahrens ein Höhenprofil messen, sind grundsätzlich bekannt. Bei derartigen Lichtschnittsensoren wird eine Lichtlinie auf die zu vermessende Oberfläche projiziert und von einem Kamerasensor wieder erfasst. Durch den Unterschied von Projektions- zu Beobachtungsrichtung zeichnet sich das Höhenprofil der Oberfläche in Form von Linienversätzen zu einer Referenzlinie auf dem Kamerasensor ab. Die Linienversätze können mittels bekannten Bildverarbeitungsalgorithmen detektiert und quantitativ erfasst werden. Durch die Bewegung des Kamerasensors erhält man Istwerte der Oberfläche bzw. des Oberflächenprofils in dreidimensionalen kartesischen Koordinaten, also in x-, y- und z-Richtung. Je flacher die Lichtlinie auf die Oberfläche trifft, desto stärker ist der Linienversatz aufgrund von Höhenunterschieden. Hierdurch ist die Auflösung des Lichtschnittsensors einstellbar, sodass das Höhenprofil mit einer gewünschten Genauigkeit messbar ist. Vorzugsweise ist der Lichtschnittsensor als Laserschnittsensor ausgebildet.

Ein Verfahren nach Anspruch 3 gewährleistet eine hohe Produktivität.

Ein Verfahren nach Anspruch 4 ermöglicht die Vermeidung von Auftragsfehlern in Form einer Überlappung nebeneinander aufgetragener Bahnen und/oder von unerwünscht großen Spalten zwischen nebeneinander aufgetragenen Bahnen. Hierzu wird anhand des gemessenen Höhenprofils die Längskante der zuvor aufgetragenen Bahn detektiert, sodass die daneben aufzutragende Bahn mittels der Positioniereinrichtung an der detektierten Längskante ausgerichtet werden kann. Die in der Steuereinrichtung gespeicherten Sollwerte zur Ansteuerung des mindestens einen Antriebmotors bzw. der Antriebsmotoren werden für den Auftrags Vorgang der nachfolgend aufzutragenden Bahn korrigiert. Darüber hinaus kann auf diese Weise zu Beginn der Herstellung die Längskante einer Referenzbahn bzw. einer Referenzspur detektiert werden, an der die erste aufzutragende Bahn ausgerichtet wird.

Ein Verfahren nach Anspruch 5 gewährleistet eine gleichbleibende Qualität im Auftragen der Bahnen während der gesamten Herstellung des Faserverbundmaterial-Bauteils. Dadurch, dass in vordefinierten Abständen positionierte Referenzmarken detektiert werden, wird vermieden, dass die Korrekturen von Sollwerten bei den einzelnen Auftragsvorgängen sich zu einer unzulässigen Abweichung von dem vordefinierten Auftragsschema aufsummieren. Die Referenzmarken sind beispielsweise in regelmäßigen Abständen an der Bauteilform angeordnet.

Ein Verfahren nach Anspruch 6 ermöglicht die Verminderung von Auftragsfehlern bei bereits aufgetragenen Bahnen. Wird in einer aufgetragenen Bahn und/oder zwischen zwei aufgetragenen Bahnen ein unzulässiger Höhen- bzw. Dickenunterschied anhand des Höhenprofils detektiert, so steuert die Steuereinrichtung mindestens einen der Antriebsmotoren der Positioniereinrichtung derart an, dass beim Auftragen einer nachfolgenden Bahn an den entsprechenden Stellen die Anpresskraft des Auftragswerkzeugs auf die Bauteilform verändert bzw. erhöht oder vermindert wird. Hierdurch können unzulässige Höhenunterschiede wieder in einen zulässigen Toleranzbereich zurückgeführt werden.

Ein Verfahren nach Anspruch 7 gewährleistet eine gleichbleibende Qualität im Auftragen der Bahnen während der gesamten Herstellung des Faserverbundmaterial-Bauteils. Dadurch, dass anhand des Höhenprofils ein Höhenunterschied zwischen der aufgetragenen Bahn und einer Referenzmarke detektiert wird, wird vermieden, dass durch das Verändern oder Anpresskräfte beim Auftragen einzelner Bahnen unzulässige Abweichungen von einem vordefinierten Auftragsschema entstehen. Die Referenzmarken sind beispielsweise in regelmäßigen Abständen an der Bauteilform angeordnet.

Durch ein Verfahren nach Anspruch 8 können detektierte Höhenunterschiede auf einfache Weise ausgeglichen werden.

Ein Verfahren nach Anspruch 9 gewährleistet ein genaues Ausgleichen von Höhenunterschieden. Dadurch, dass die Anpresskraft des Auftragswerkzeugs auf die Bauteilform mittels des zwischen dem Auftragswerkzeugs und der Positioniereinrichtung angeordneten Kraft-Messsensors unmittelbar gemessen wird, kann eine gewünschte Soll-Anpresskraft durch Ansteuern mindestens eines Antriebsmotors genau eingestellt werden. Insbesondere kann die gemessene Anpresskraft in der Steuereinrichtung einen Regelalgorithmus zugeführt werden, der durch einen Vergleich der gemessenen Anpresskraft mit einer Soll-Anpresskraft das einzustellende Drehmoment des mindestens einen Antriebsmotors ermittelt und einstellt.

Ein Verfahren nach Anspruch 10 gewährleistet eine gleichbleibende Qualität im Auftragen der Bahnen während des gesamten Herstellungsvorgangs des Faserverbundmaterial-Bauteils. Dadurch, dass die Position des Auftragswerkzeugs relativ zu der Bauteilform in einem dreidimensionalen Absolut-Koordinatensystem bekannt ist, können unzulässige Abweichungen zu einem vordefinierten Auftragsschema aufgrund von Korrekturen einzelner Auftragsvorgänge vermieden werden. Das dreidimensionale AbsolutKoordinatensystem kann beispielsweise durch ein Indoor-GPS bereitgestellt werden. Die Bereitstellung des Absolut-Koordinatensystems kann alternativ oder zusätzlich zu der Bereitstellung von Referenzmarken erfolgen.

Ein Verfahren nach Anspruch 11 ermöglicht die Detektion von Auftragsfehlern nach dem Auftragen einer Bahn. Derartige Auftragsfehler sind beispielsweise Unebenheiten, Falten, Spalte, aneinanderstoßende oder überlappende Kanten und Verschmutzungen. Da der optische Kamerasensor vorzugsweise in Auftragsrichtung dem Auftragswerkzeug nachgeordnet ist, wird dieser auch als Nachlauf-Sensor bezeichnet. Der optische Kamerasensor ist beispielsweise Teil einer Prüfeinrichtung, die mittels einer rotationssymmetrischen Beleuchtung eine Bildsequenz zu unterschiedlichen Beleuchtungswinkeln erfasst. Derartige Prüfeinrichtungen sind bekannt. Detektierte Auftragsfehler können hinsichtlich ihrer Qualitätsbeeinträchtigung überprüft werden.

Der Erfindung liegt ferner die Aufgabe zugrunde, eine Fertigungseinheit zu schaffen, die die Herstellung von Faserverbundmaterial-Bauteilen mit hoher Produktivität und Qualität ermöglicht.

Diese Aufgabe wird durch eine Fertigungseinheit mit den Merkmalen des Anspruchs 12 gelöst. Die Vorteile der erfindungsgemäßen Fertigungseinheit entsprechen den bereits beschriebenen Vorteilen des erfindungsgemäßen Verfahrens. Insbesondere kann die Fertigungseinheit entsprechend den Ansprüchen 2 bis 11 weitergebildet werden.

Weitere Merkmale, Vorteile und Einzelheiten der Erfindung ergeben sich aus der nachfolgenden Beschreibung eines Ausführungsbeispiels. Es zeigen:
- Fig. 1: eine perspektivische Ansicht einer Fertigungseinheit zur Herstellung von Faserverbundmaterial-Bauteilen,
- Fig. 2: eine teilweise geschnittene Seitenansicht der Fertigungseinheit in Fig. 1,
- Fig. 3: eine erste perspektivische Ansicht eines Auftragswerkzeugs der Fertigungseinheit in Fig. 1 mit zwei Höhenprofil-Messsensoren und einem optischen Kamerasensor,

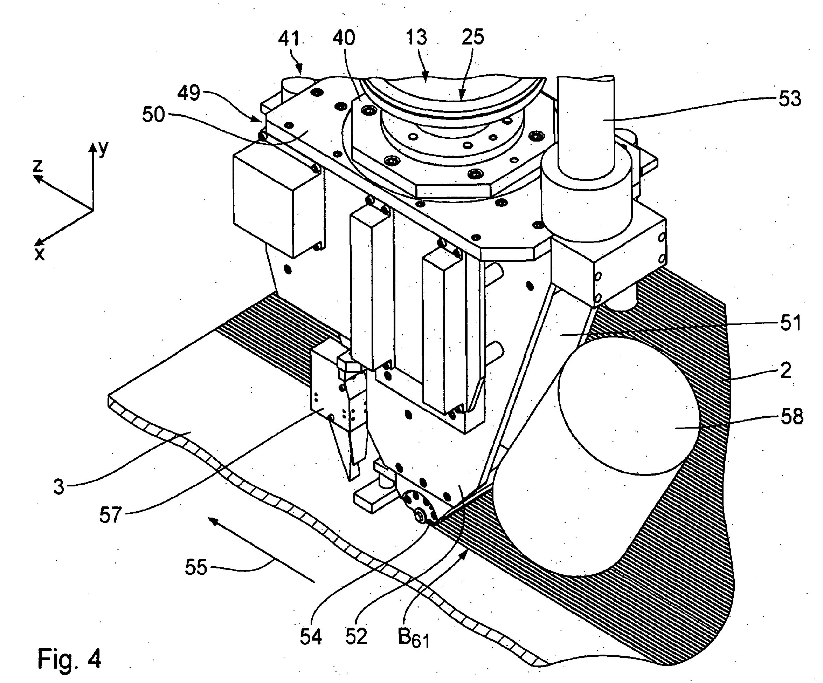

- Fig. 4: eine zweite perspektivische Ansicht des Auftragswerkzeugs in Fig. 3,

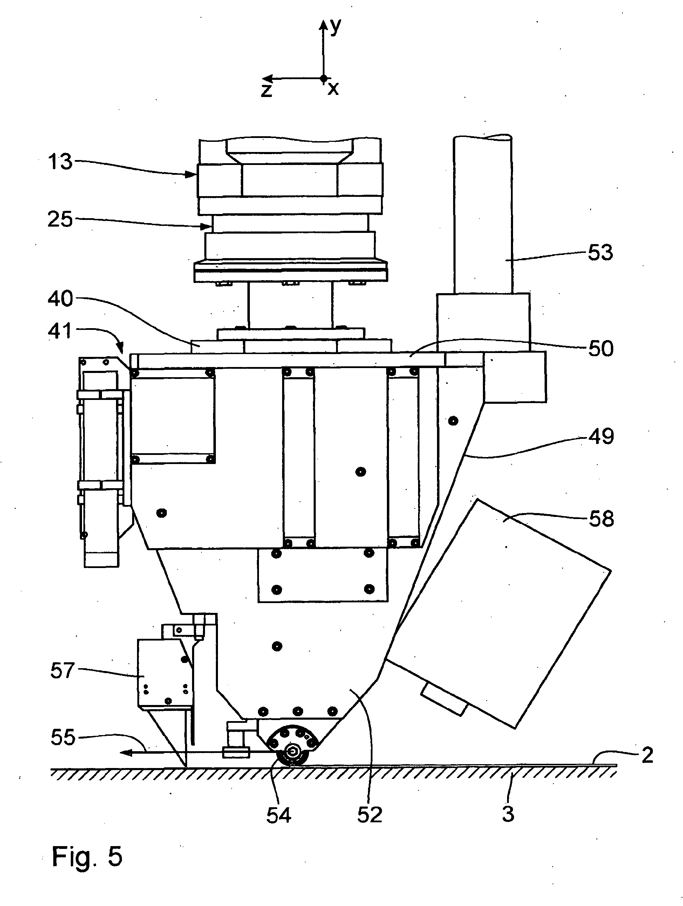

- Fig. 5: eine Seitenansicht des Auftragswerkzeugs in Fig. 3,

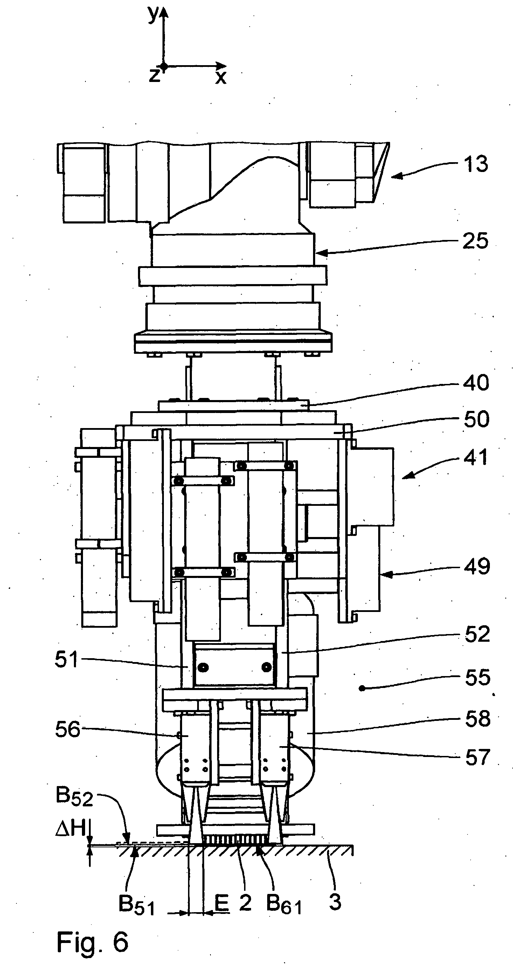

- Fig. 6: eine Frontansicht des Auftragswerkzeugs in Fig. 3, und
- Fig. 7: eine schematische Darstellung des Messprinzips der Höhen-profil-Messsensoren.

Eine Fertigungseinheit 1 dient zur Herstellung von Faserverbundmaterial-Bauteilen durch Auftragen von Faserverbundmaterial 2 auf eine Bauteilform 3. Die Fertigungseinheit 1 weist eine Positioniereinrichtung 4 mit einem Schlitten 6 auf, der auf einer Führungsbahn 5 entlang der Bauteilform 3 verfahrbar ist. Hierzu ist der Schlitten 6 an Führungsschienen 7 und in einer Führungsnut 8 gelagert und geführt. Die Führungsbahn 5 verläuft in einer x-Richtung und ist in einer senkrecht dazu verlaufenden y-Richtung von der Bauteilform 3 beabstandet. An einer Unterseite des Schlittens 6 sind zwei Antriebsmotoren 9 befestigt, die jeweils über ein Winkelgetriebe 10 ein Zahnrad 11 drehantreiben. Das jeweilige Zahnrad 11 ist in Eingriff mit einer in der Führungsnut 8 angeordneten Zahnleiste 12, sodass die Fertigungseinheit 1 auf der Führungsbahn 5 linear verfahrbar ist. Die Oberseite des Schlittens 6 dient als Plattform für einen der Positioniereinrichtung 4 zugehörigen Roboter 13, zwei kühlbare Materialspeicher 14, 15, eine Kühleinrichtung 16, eine Energieversorgungseinrichtung 17 und eine Steuereinrichtung 18. Mittels der Steuereinrichtung 18 sind die Antriebsmotoren 9 derart ansteuerbar, dass zwischen den Zahnrädern 11 und der Zahnleiste 12 eine Vorspannung und somit ein spielfreies Antriebssystem erzeugt wird, wodurch eine hohe Positioniergenauigkeit erzielbar ist. Die x- und die y-Richtung sowie eine senkrecht dazu verlaufende z-Richtung bilden ein dreidimensionales Absolut-Koordinatensystem K.

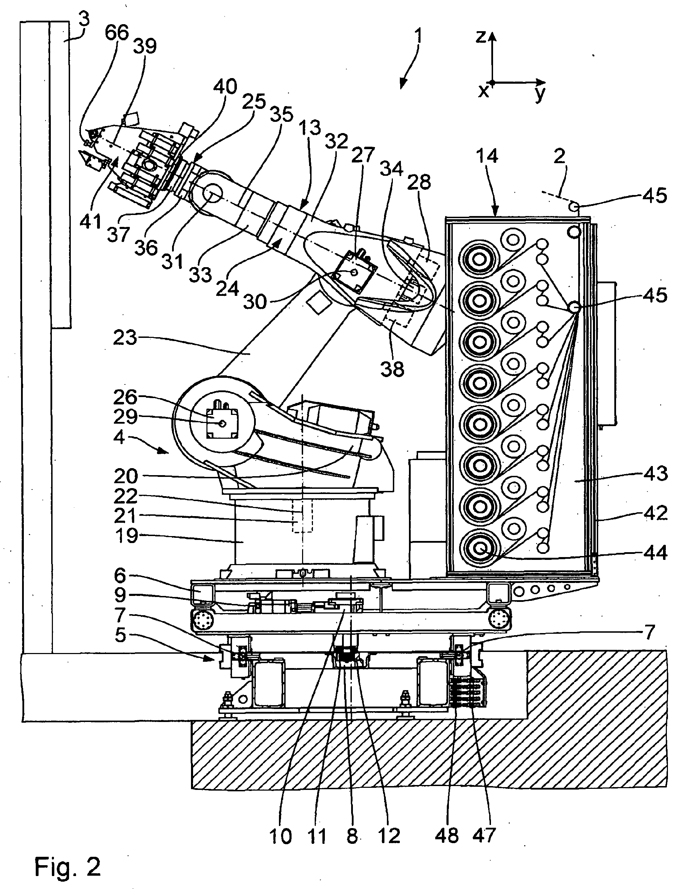

Der Roboter bzw. Industrieroboter 13 ist mit einem Grundgestell 19 fest an dem Schlitten 6 angeordnet. Auf dem Grundgestell 19 ist ein als Karussell bezeichnetes Schwenkteil 20 angeordnet, das mittels eines Antriebsmotors 21 um eine parallel zu der z-Richtung verlaufende vertikale Schwenkachse 22 verschwenkbar ist. An dem Schwenkteil 20 sind drei endseitig miteinander verbundene Schwenkarme 23, 24, 25 angeordnet, die mittels jeweiliger Antriebsmotoren 26, 27, 28 um zugehörige, horizontal verlaufende Schwenkachsen 29, 30, 31 verschwenkbar sind. Der Schwenkarm 24 ist zweiteilig ausgebildet und weist zwei Schwenkteile 32, 33 auf, die mittels eines Antriebsmotors 34 um ihre Mittellängsachse 35 relativ zueinander verschwenkbar sind. Die Mittellängsachse 35 der Schwenkteile 32, 33 bildet somit eine weitere Schwenkachse. Entsprechend ist der Schwenkarm 25 zweiteilig ausgebildet und weist zwei Schwenkteile 36, 37 auf, die mittels eines Antriebsmotors 38 um eine Mittellängsachse 39 relativ zueinander verschwenkbar sind. In Fig. 2 fallen die Mittellängsachse 35 und die Mittellängsachse 39 zusammen. Die Mittellängsachse 39 der Schwenkteile 36, 37 bildet somit eine weitere Schwenkachse.

An dem Schwenkarm 25 ist endseitig ein als Druckring ausgebildeter Kraft-Messsensor 40 und daran ein als Faserlegekopf ausgebildetes Auftragswerkzeug 41 angeordnet. Das Auftragswerkzeug 41 ist somit um sechs Schwenkachsen 22, 29, 30, 31, 35 und 39 verschwenkbar. Da die Positioniereinnichtung 4 entlang der Führungsbahn 5 verfahrbar ist, stellt diese für die Positioniereinrichtung 4 zusätzlich eine lineare Achse bereit.

Das Auftragswerkzeug 41 dient zum Auftragen des Faserverbundmaterials 2 auf die Bauteilform 3. Zur Bereitstellung des Faserverbundmaterials 2 dienen die auf dem Schlitten 6 angeordneten Materialspeicher 14, 15. Die Materialspeicher 14, 15 sind baugleich ausgebildet, sodass nachfolgend lediglich ein Materialspeicher 14 beschrieben ist. Der Materialspeicher 14 weist ein Gehäuse 42 auf, dessen Innenraum 43 mittels der Kühleinrichtung 16 kühlbar ist. In dem Innenraum 43 sind mehrere Materialrollen 44 mit dem Faserverbundmaterial 2 drehbar gelagert. Das Faserverbundmaterial 2 ist jeweils über mehrere Umlenkrollen 45 aus dem Materialspeicher 14 und zu dem Auftragswerkzeug 41 geführt. Das Faserverbundmaterial 2 ist mittels des Auftragswerkzeugs 41 durch Ausüben einer Zugkraft aus dem Materialspeicher 14 entnehmbar. Die Kühleinrichtung 16 ist zur Kühlung beider Materialspeicher 14, 15 zwischen diesen angeordnet.

Oberhalb der Kühleinrichtung 16 ist zwischen den Materialspeichern 14, 15 ein Schaltschrank 46 angeordnet, in dem die Energieversorgungseinrichtung 17 und die Steuereinrichtung 18 angeordnet sind. Die Energieversorgungseinrichtung 17 ist derart ausgebildet, dass die Fertigungseinheit 1 entlang der gesamten Führungsbahn 5 frei verfahrbar ist. Hierzu weist die Energieversorgungseinrichtung 17 Schleifkontakte 47 auf, die an dem Schlitten 6 angeordnet und in Kontakt mit entsprechenden Schleifkontakten 48 der Führungsbahn 5 sind. Mittels der Schleifkontakte 47, 48 ist elektrische Energie von einer zentralen Energieversorgung zu der Energieversorgungseinrichtung 17 übertragbar. Die Energieversorgungseinrichtung 17 versorgt durch eine geeignete Schaltung alle auf dem Schlitten 6 angeordneten Verbraucher, insbesondere die Antriebsmotoren 9, 21, 26, 27, 28, 34 und 38, die Kühleinrichtung 16 und die Steuereinrichtung 18 mit elektrischer Energie.

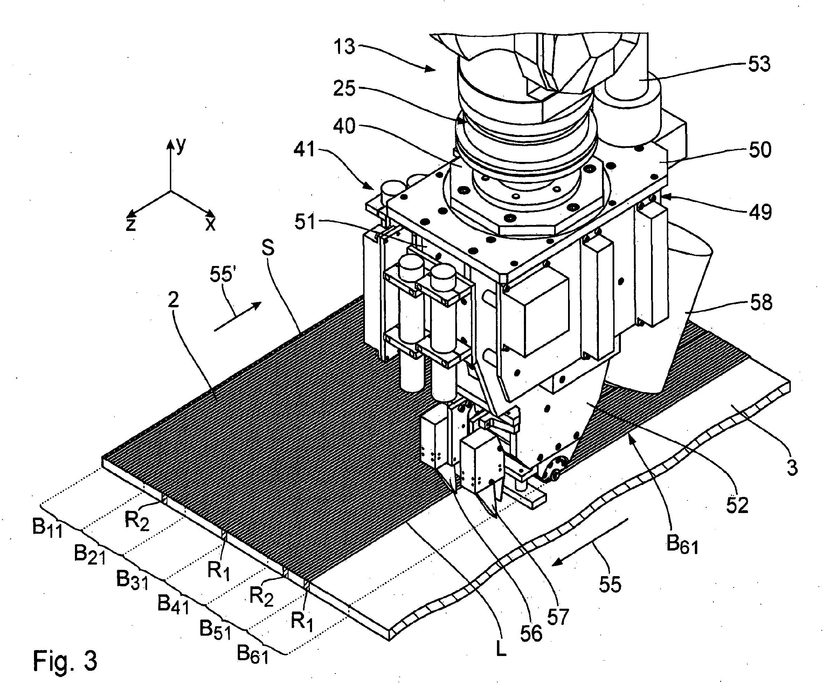

Das Auftragswerkzeug 41 weist ein mit dem Kraft-Messsensor 40 verbundenes Traggestell 49 auf. Das Traggestell 49 ist aus einer Grundplatte 50 und zwei seitlich daran befestigten, dreieckförmigen Seitenplatten 51, 52 aufgebaut. An der Grundplatte 50 ist eine Faserzuführung 53 befestigt, durch die das Faserverbundmaterial 2 zwischen die Seitenplatten 51, 52 und zu einer endseitig an den Seitenplatten 51, 52 drehbar gelagerten Anpressrolle 54 geführt ist. Der Anpressrolle 54 sind in einer in Fig. 3 gekennzeichneten Auftragsrichtung 55 zwei Höhenprofil-Messsensoren 56, 57 vorgeordnet, die seitlich nebeneinander an den Seitenplatten 51, 52 befestigt sind. Diese Höhenprofil-Messsensoren 56, 57 werden auch als Vorlauf-Sensoren bezeichnet. Der Anpressrolle 54 ist in der Auftragsrichtung 55 ein optischer Kamerasensor 58 in Form einer Digitalkamera nachgeordnet, der an einer zu den Höhenprofil-Messsensoren 56, 57 gegenüber liegenden Seite an dem Traggestell 49 angeordnet ist. Der Kamerasensor 58 wird auch als Nachlauf-Sensor bezeichnet.

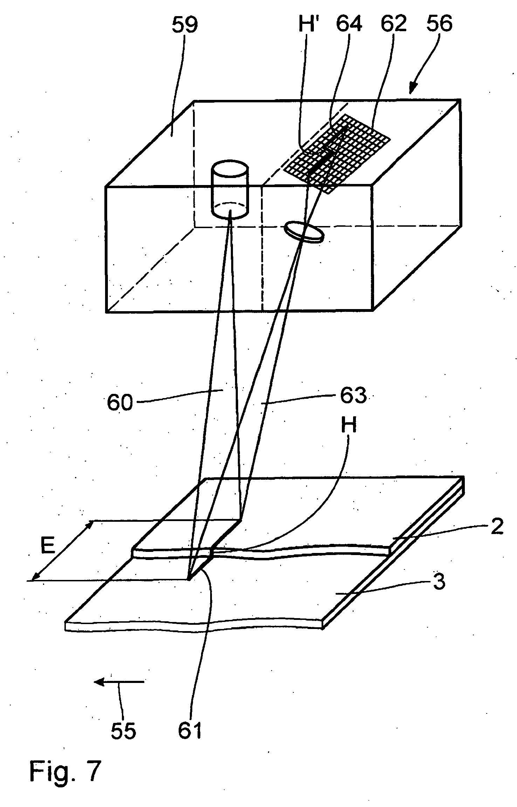

Die Höhenprofil-Messsensoren 56, 57 sind identisch ausgebildet, sodass nachfolgend lediglich der Höhenprofil-Messsensor 56 anhand der Fig. 7 beschrieben ist. Der Höhenprofil-Messsensor 56 ist als Lichtschnittsensor bzw. Laserschnittsensor ausgebildet und ist nachfolgend so bezeichnet. Der Lichtschnittsensor 56 weist eine Lichterzeugungseinheit 59 zur Erzeugung eines Lichtstrahls 60 auf, der als Lichtlinie 61 auf die Bauteilform 3 bzw. das darauf aufgetragene Faseryerbundmaterial 2 projizierbar ist. Die Länge der Lichtlinie 61 definiert einen quer zu der Auftragsrichtung 55 angeordneten Erfassungsbereich E des Lichtschnittsensors 56. Mittels eines Detektors 62 ist ein reflektierte Lichtstrahl 63 derart erfassbar, dass die Lichtlinie 61 in Form einer Lichtlinienabbildung 64 auf dem Detektor 62 abgebildet wird. Hierzu weist der Lichtstrahl 60 eine Projektionsrichtung auf, die mit der Oberflächennormalen der Bauteilform 3 einen Winkel einschließt. Der Detektor 62 ist relativ zu der Oberflächennormalen in einem Winkel derart angeordnet, dass der in einer Beobachtungsrichtung reflektierte Lichtstrahl 63 auf den Detektor 62 trifft. Liegt im Erfassungsbereich E ein Höhenprofil H, so wird ein entsprechendes Höhenprofil H' als Linienversatz zu einer Referenzlinie auf den Detektor 62 abgebildet, das mittels üblichen Bildverarbeitungsalgorithmen messbar ist.

Der Kamerasensor 58 ist beispielsweise Teil einer Prüfeinrichtung, die eine um eine Mittellängsachse rotationssymmetrische Beleuchtung mit ringförmig angeordneten Lichtquellen aufweist. Hiermit sind Bildsequenzen mit unterschiedlichen Beleuchtungswinkeln aufnehmbar.

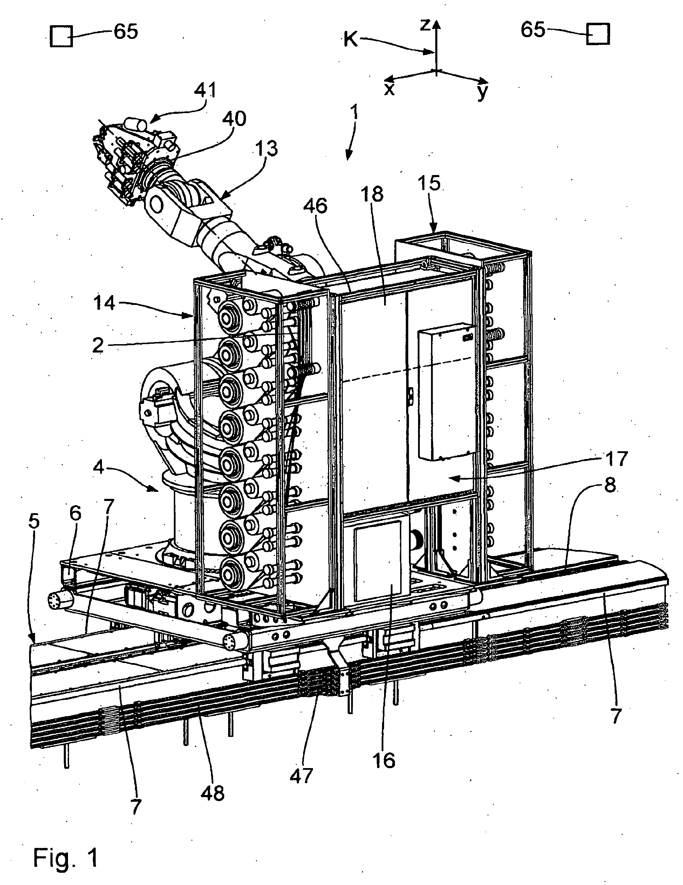

Zur Bereitstellung des Absolut-Koordinatensystems K dient ein Indoor-GPS, das mehrere im Raum verteilte und beanstandete Sendeeinheiten 65 aufweist. Diese sind beispielhaft in Fig. 1 veranschaulicht. Die von den Sendeeinheiten 65 ausgestrahlten Positionssignale sind mittels einer Empfangseinheit 66 messbar. Die Empfangseinheit 66 ist beispielsweise an dem Traggestell 49 nahe der Anpressrolle 54 angeordnet. Die empfangenen Positionssignale sind an die Steuereinrichtung 18 übertragbar, die daraus eine Absolutposition des Auftragswerkzeugs 41 in dem dreidimensionalen Absolut-Koordinatensystem K ermittelt.

Zu Beginn der Herstellung ist noch kein Faserverbundmaterial 2 auf die Bauteilform 3 aufgetragen. Das Faserverbundmaterial 2 wird bahnförmig auf die Bauteilform 3 aufgetragen. Die Bauteilform 3 weist hierzu eine über die Oberfläche der Bauteilform 3 hervorspringende Referenzspur S auf, die mittels des Lichtschnittsensors 56 bzw. 57 detektierbar ist. Darüber hinaus weist die Bauteilform 3 in der x-Richtung gleichmäßig beabstandete erste Referenzmarken R₁ auf, die ebenfalls über die Oberfläche der Bauteil-form 3 hervorspringen und mittels des Lichtschnittsensors 56 bzw. 57 detektierbar sind. Zusätzlich zu den ersten Referenzmarken R₁ sind an der Bauteilform 3 zweite Referenzmarken R₂ angeordnet, die gegenüber der Oberfläche der Bauteilform 3 eine und/mehrere vordefinierte Höhen aufweisen.

Zum Auftragen einer ersten Bahn B₁₁ wird mittels des Lichtschnittsensors 57 in der beschriebenen Weise die Referenzspur S detektiert. Während des Detektierens wird das Auftragswerkzeug 41 mittels der Positioniereinrichtung 4 verfahren und die erste Bahn B₁₁ in der Auftragsrichtung 55' auf die Bauteilform 3 aufgetragen. Am Ende des Auftragsvorgangs wird das Auftragswerkzeug 41. mittels des Antriebsmotors 38 um 180° um die Schwenkachse 39 gedreht, sodass der Herstellvorgang unmittelbar mit dem Auftragen einer zweiten Bahn B₂₁ in der Auftragsrichtung 55 fortgeführt werden kann. Fig. 3 zeigt fünf auf die Bauteilform 3 aufgetragene Bahnen B₁₁ bis B₅₁. Das Auftragswerkzeug 41 ist während des Auftragens einer sechsten Bahn B₆₁ in der Auftragsrichtung 55 gezeigt. Die vorher aufgetragene Bahn B₅₁ bildet eine in der z-Richtung verlaufende Längskante L aus, die im Erfassungsbereich E des Lichtschnittsensors 56 liegt. Die Längskante L bildet ein Höhenprofil H aus, das während des Auftragens der Bahn B₆₁ mit dem Lichtschnittsensor 56 gemessen wird. Da der Lichtschnittsensor 56 in der Auftragsrichtung 55 der Anpressrolle 54 vorgeordnet ist, kann die Bahn B₆₁ in Abhängigkeit der anhand des gemessenen Höhenprofils H detektierten Längskante L mittels der Positioniereinrichtung 4 exakt seitlich neben der Bahn B₅, aufgetragen werden. Auftragsfehler, wie beispielsweise eine Überlappung der Bahnen B₅₁ und B₆₁ oder ein zu großer Spalt zwischen den Bahnen B₅₁ und B₆₁ können somit vermieden werden. Weicht der Verlauf der Bahn B₅₁ von einem Sollverlauf ab, so werden die in der Steuereinrichtung 18 gespeicherten Sollwerte zum Auftragen der Bahn B₆₁ anhand der detektierten Längskante L korrigiert.

Damit die Korrektur der Sollwerte beim Auftragen der Bahnen B₁₁ bis B₆₁ und weiterer Bahnen nicht zu einer unzulässigen Abweichung von einem Auftragsschema führt, sind in regelmäßigen Abständen die Referenzmarken R₁ an der Bauteilform 3 angeordnet, die beim Auftragen ebenfalls von den Lichtschnittsensoren 56, 57 detektiert werden. Wird mittels der Steuereinrichtung 18 eine unzulässige Abweichung von einer der Referenzmarken R₁ festgestellt, so wird dies bei der nachfolgenden Korrektur von Sollwerten berücksichtigt, sodass die unzulässige Abweichung wieder in einen zulässigen Toleranzbereich zurückgeführt wird. Die Steuereinrichtung 18 steuert also anhand des gemessenen Höhenprofils H mindestens einen der Antriebsmotoren 9, 21, 26, 27, 28, 34, 38 derart an, dass Auftragsfehler vermieden werden. Derartige Auftragsfehler sind beispielsweise Überlappungen oder Spalte.

Während des Auftragens der Bahnen-B₁₁ bis B₆₁ werden mittels des optischen Kamerasensors 58 beim Auftragen aufgetretene Auftragsfehler detektiert und in der Steuereinrichtung 18 überprüft und gespeichert.

Wird beim Auftragen der Bahn B₆₁ ein Höhen- bzw. Dickenunterschied ΔH der aufgetragenen Bahn B₅₁ zur Oberfläche der Bauteilform 3 detektiert, der außerhalb eines vordefinierten Toleranzbereichs liegt, wird dies in der Steuereinrichtung 18 vermerkt. Entsprechendes gilt, wenn beim späteren Auftragen einer Bahn auf eine bereits aufgetragene Lage von Bahnen ein Höhenunterschied ΔH detektiert wird. Wird bei einem nachfolgenden Auftragsvorgang eine Bahn B₅₂ auf die Bahn B₅₁ aufgetragen, so wird mittels der Positioniereinrichtung 4 die Anpresskraft des Auftragswerkzeugs 41 auf die Bauteilform 3 derart verändert, dass der detektierte Höhenunterschied ΔH wieder in den Toleranzbereich zurückgeführt wird bzw. vermindert wird. Die Anpresskraft wird mittels des Kraft-Messsensors 40 gemessen. Die Messwerte werden an die Steuereinrichtung 18 übermittelt, die diese mit Sollwerten vergleicht und anhand des Vergleichs die Antriebsmotoren 9, 21, 26, 27, 28, 34, 38 derart ansteuert, dass die gewünschte Anpresskraft eingestellt wird. Auf diese Weise wird eine Lagendickenmessung und -einstellung durchgeführt.

Beim Auftragen der Lagen werden die Referenzmarken R₂ detektiert, die Sollhöhen der aufgetragenen Lagen charakterisieren. Wird beispielsweise beim Auftragen der Bahn B₅₂ eine unzulässige Abweichung von der Referenzmarke R₂ detektiert, so wird dies in der Steuereinrichtung 18 vermerkt, die bei nachfolgenden Auftragsvorgängen die Anpresskraft derart verändert, dass die unzulässige Abweichung wieder in einen zulässigen Toleranzbereich zurückgeführt wird. Hierdurch wird eine Lagendickenmessung und -einstellung realisiert.

Da das Positionieren des Auftragswerkzeuges 41 in dem Absolut-Koordinatensystem K erfolgt, kann die Überwachung der Einhaltung des Auftragsschemas auch über dieses Absolut-Koordinatensystem K erfolgen. In diesem Fall kann auch auf die Referenzmarken R₁, R₂ und die Referenzspur S verzichtet werden. Vorzugsweise erfolgt die Überwachung sowohl mittels der Referenzmarken R₁, R₂ und der Referenzspur S als auch mittels des Absolut-Koordinatensystems K.

## Patentansprüche

1. Verfahren zur Herstellung von Faserverbundmaterial-Bauteilen mit folgenden Schritten:
- Bereitstellen einer Fertigungseinheit (1) zum Auftragen eines Faserverbundmaterials (2) auf eine Bauteilform (3),
-- wobei die Fertigungseinheit (1) eine Positioniereinrichtung (4) und ein daran angeordnetes Auftragswerkzeugs (41) aufweist,
-- wobei die Positioniereinrichtung (4) zum Positionieren des Auftragswerkzeugs (41) relativ zu der Bauteilform (3) mehrere mittels einer Steuereinrichtung (18) ansteuerbare Antriebsmotoren (9, 21, 26, 27, 28, 34, 38) aufweist, und
-- wobei die Fertigungseinheit (1) mindestens zwei Höhenprofil-Messsensoren (56, 57) mit einem auf die Bauteilform (3) gerichteten Erfassungsbereich (E) aufweist,
- Auftragen einer ersten Bahn (B₅₁) des Faserverbundmaterials (2) auf die Bauteilform (3),
- Messen eines Höhenprofils (H) derart, dass zumindest ein Teil der aufgetragenen ersten Bahn (B₅₁) im Erfassungsbereich (E) mindestens eines der Höhenprofil-Messsensoren (56, 57) liegt, und
- Auftragen einer zweiten Bahn (B₅₂, B₆₁) des Faserverbundmaterials (2) auf die Bauteilform (3) derart, dass die Steuereinrichtung (18) mindestens einen der Antriebsmotoren (9, 21, 26, 27, 28, 34, 38) in Abhängigkeit des gemessenen Höhenprofils (H) ansteuert, wobei die Bahnen (B₅₁, B₆₁) in entgegengesetzten Auftragsrichtungen (55, 55') aufgetragen werden, wobei
-- zwei der mindestens zwei Höhenprofil-Messsensoren (56, 57) nebeneinander an dem Auftragswerkzeug (41) angeordnet sind , und
-- das Auftragswerkzeug (41) bei einem Wechsel der Auftragsrichtung (55, 55') um 180° relativ zu der Positioniereinrichtung (4) gedreht wird.
-- das Auftragswerkzeug (41) bei einem Wechsel der Auftragsrichtung (55, 55') um 180° relativ zu der Positioniereinrichtung (4) gedreht wird.

2. Verfahren nach Anspruch 1, **dadurch gekennzeichnet, dass** der Höhenprofil-Messsensor (56, 57) als Lichtschnittsensor ausgebildet ist und das Messen des Höhenprofils (H) berührungslos mittels eines Lichtschnittverfahrens erfolgt.

3. Verfahren nach Anspruch 1 oder 2, **dadurch gekennzeichnet, dass** das Messen des Höhenprofils (H) während des Auftragens der ersten Bahn (B₅₁) erfolgt.

4. Verfahren nach einem der Ansprüche 1 bis 3, **dadurch gekennzeichnet, dass** anhand des gemessenen Höhenprofils (H) eine Längskante (L) der ersten Bahn (B₅₁) detektiert wird und die zweite Bahn (B₆₁) in Abhängigkeit der detektierten Längskante (L) mittels der Positioniereinrichtung (4) seitlich neben der ersten Bahn (B₅₁) aufgetragen wird.

5. Verfahren nach einem der Ansprüche 1 bis 4, **dadurch gekennzeichnet, dass** anhand des gemessenen Höhenprofils (H) eine erste Referenzmarke (R₁) detektiert wird und die zweite Bahn (B₆₁) in Abhängigkeit der detektierten Referenzmarke (R₁) mittels der Positioniereinrichtung (4) seitlich neben der ersten Bahn (B₅₁) aufgetragen wird.

6. Verfahren nach einem der Ansprüche 1 bis 5, **dadurch gekennzeichnet, dass** anhand des gemessenen Höhenprofils (H) ein Höhenunterschied (ΔH) in Bezug zu der ersten Bahn (B₅₁) detektiert wird und die zweite Bahn (B₅₂) in Abhängigkeit des detektierten Höhenunterschieds (ΔH) mittels der Positioniereinrichtung (4) auf die erste Bahn (B₅₁) aufgetragen wird.

7. Verfahren nach einem der Ansprüche 1 bis 6, **dadurch gekennzeichnet, dass** anhand des gemessenen Höhenprofils (H) ein Höhenunterschied (ΔH) zwischen der ersten Bahn (B₅₁) und einer zweiten Referenzmarke (R₂) detektiert wird und die zweite Bahn (B₅₂) in Abhängigkeit des detektierten Höhenunterschieds (ΔH) mittels der Positioniereinrichtung (4) auf die erste Bahn (B₅₁) aufgetragen wird.

8. Verfahren nach Anspruch 6 oder 7, **dadurch gekennzeichnet, dass** während des Auftragens der zweiten Bahn (B₅₂) mittels der Positioniereinrichtung (4) eine Anpresskraft des Auftragswerkzeugs (41) auf die Bauteilform (3) verändert wird.

9. Verfahren nach einem der Ansprüche 6 bis 8, **dadurch gekennzeichnet, dass** während des Auftragens der zweiten Bahn (B₅₂) eine Anpresskraft des Auftragswerkzeugs (41) auf die Bauteilform (3) mittels eines zwischen dem Auftragswerkzeug (41) und der Positioniereinrichtung (4) angeordneten Kraft-Messsensors (40) gemessen wird.

10. Verfahren nach einem der Ansprüche 1 bis 9, **dadurch gekennzeichnet, dass** das Auftragen der Bahnen (B₅₁, B₅₂, B₆₁) in Bezug zu einem Absolut-Koordinatensystem (K) erfolgt.

11. Verfahren nach einem der Ansprüche 1 bis 10, **dadurch gekennzeichnet, dass** während des Auftragens einer Bahn (B₅₁, B₅₂, B₆₁) mittels eines optischen Kamerasensors (58) beim Auftragen aufgetretene Auftragsfehler detektiert werden.

12. Fertigungseinheit zur Herstellung von Faserverbundmaterial-Bauteilen mit
- einem Auftragswerkzeug (41) zum Auftragen eines Faserverbundmaterials (2) auf eine Bauteilform (3),
- einer Positioniereinrichtung (4), die zum Positionieren des daran angeordneten Auftragswerkzeugs (41) relativ zu der Bauteilform (3) mehrere Antriebsmotoren (9, 21, 26, 27, 28, 34, 38) aufweist,
- mindestens zwei Höhenprofil-Messsensor (56, 57) mit einem auf die Bauteilform (3) gerichteten Erfassungsbereich (E), wobei zwei der mindestens zwei Höhenprofil-Messsensoren (56, 57) nebeneinander an dem Auftragswerkzeug (41) angeordnet sind, und
- einer Steuereinrichtung (18) zur Ansteuerung der Antriebsmotoren (9, 21, 26, 27, 28, 34, 38), die derart ausgebildet ist, dass
-- eine erste Bahn (B₅₁) des Faserverbundmaterials (2) auf die Bauteilform (3) auftragbar ist,
-- eine Höhenprofil (H) derart messbar ist, dass zumindest ein Teil der aufgetragenen ersten Bahn (B₅₁) im Erfassungsbereich (E) mindestens eines der Höhenprofil-Messsensoren (56, 57) liegt,
-- eine zweite Bahn (B₅₂, B₆₁) des Faserverbundmaterials (2) auf die Bauteilform (3) derart auftragbar ist, dass mindestens einer der Antriebsmotoren (9, 21, 26, 27, 28, 34, 38) in Abhängigkeit des gemessenen Höhenprofils (H) angesteuert wird, und
-- die Bahnen (B₅₁, B₆₁) in entgegengesetzten Auftragsrichtungen (55, 55') auftragbar sind, wobei das Auftragswerkzeug (41) bei einem Wechsel der Auftragsrichtung (55, 55') um 180° relativ zu der Positioniereinrichtung (4) gedreht wird.

## Claims

1. Method for manufacturing fibre-composite components, the method comprising the following steps:
- providing a production unit (1) for applying a fibre-composite material (2) onto a component mould (3),
○ wherein the production unit (1) has a positioning installation (4) and an application tool (41) disposed thereon,
○ wherein the positioning installation (4) has a plurality of drive motors (9, 21, 26, 27, 28, 34, 38) which for positioning of the application tool (41) in relation to the component mould (3) are actuatable by means of a controller installation (18), and
○ wherein the production unit (1) has at least two height-profile measuring sensors (56, 57) having an acquisition range (E) which is directed towards the component mould (3);
- applying a first web (B₅₁) of the fibre-composite material (2) onto the component mould (3) ;
- measuring a height profile (H) in such a manner that at least part of the applied first web (B₅₁) lies in the acquisition range (E) of at least one of the height-profile measuring sensors (56, 57); and
- applying a second web (B₅₂, B₆₁) of the fibre-composite material (2) onto the component mould (3) in such a manner that the controller installation (18) depending on the measured height profile (H) actuates at least one of the drive motors (9, 21, 26, 27, 28, 34, 38), wherein the webs (B₅₁, B₆₁) are applied in opposite application directions (55, 55'), wherein
∘ two of the at least two height-profile measuring sensors (56, 57) are disposed beside one another on the application tool (41), and
∘ the application tool (41) is rotated by 180° in relation to the positioning installation (4) when the application direction (55, 55') is reversed.

2. Method according to Claim 1, **characterized in that** the height-profile measuring sensor (56, 57) is configured as a light-section sensor, and that measuring of the height profile (H) is performed in a non-contacting manner by means of a light-section method.

3. Method according to Claim 1 or 2, **characterized in that** measuring of the height profile (H) is performed during application of the first web (B₅₁).

4. Method according to one of Claims 1 to 3, **characterized in that** a longitudinal edge (L) of the first web (B₅₁) is detected by means of the measured height profile (H), and that the second web (B₆₁) is applied by means of the positioning installation (4) so as to be laterally next to the first web (B₅₁) depending on the detected longitudinal edge (L).

5. Method according to one of Claims 1 to 4, **characterized in that** a first reference mark (R₁) is detected by means of the measured height profile (H), and that the second web (B₆₁) is applied by means of the positioning installation (4) so as to be laterally next to the first web (B₅₁), depending on the detected reference mark (R₁).

6. Method according to one of Claims 1 to 5, **characterized in that** a height differential (ΔH) in relation to the first web (B₅₁) is detected by means of the measured height profile (H), and that the second web (B₅₂) is applied by means of the positioning installation (4) onto the first web (B₅₁), depending on the detected height differential (ΔH).

7. Method according to one of Claims 1 to 6, **characterized in that** a height differential (ΔH) between the first web (B₅₁) and a second reference mark (R₂) is detected by means of the measured height profile (H), and that the second web (B₅₂) is applied by means of the positioning installation (4) onto the first web (B₅₁), depending on the detected height differential (ΔH).

8. Method according to Claim 6 or 7, **characterized in that** a contact pressure of the application tool (41) acting on the component mould (3) is modified during application of the second web (B₅₂) by means of the positioning installation (4).

9. Method according to one of Claims 6 to 8, **characterized in that** a contact pressure of the application tool (41) acting on the component mould (3) is measured during application of the second web (B₅₂) by means of a load-measuring sensor (40) which is disposed between the application tool (41) and the positioning installation (4).

10. Method according to one of Claims 1 to 9, **characterized in that** application of the webs (B₅₁, B₅₂, B₆₁) is performed in relation to an absolute coordinate system (K).

11. Method according to one of Claims 1 to 10, **characterized in that** application faults which have arisen during application are detected by means of an optical camera sensor (58) during application of a web (B₅₁, B₅₂, B₆₁).

12. Production unit for manufacturing fibre-composite components, the production unit having
- an application tool (41) for applying a fibre-composite material (2) onto a component mould (3);
- a positioning installation (4) which for positioning of the application tool (41) disposed thereon in relation to the component mould (3) has a plurality of drive motors (9, 21, 26, 27, 28, 34, 38);
- at least two height-profile measuring sensors (56, 57) having an acquisition range (E) which is directed towards the component mould (3), wherein two of the at least two height-profile measuring sensors (56, 57) are disposed beside one another on the application tool (41); and
- a controller installation (18) for actuating the drive motors (9, 21, 26, 27, 28, 34, 38), said controller installation (18) being configured in such a manner that
∘ a first web (B₅₁) of the fibre-composite material (2) is capable of being applied onto the component mould (3);
∘ a height profile (H) is measurable in such a manner that at least part of the applied first web (B₅₁) lies in the acquisition range (E) of at least one of the height-profile measuring sensors (56, 57);
∘ a second web (B₅₂, B₆₁) of the fibre-composite material (2) is capable of being applied onto the component mould (3) in such a manner that at least one of the drive motors (9, 21, 26, 27, 28, 34, 38) is actuated depending on the measured height profile (H); and
∘ the webs (B₅₁ B₆₁) are capable of being applied in opposite application directions (55, 55'), wherein the application tool (41) is rotated by 180° in relation to the positioning installation (4) when the application direction (55, 55') is reversed.

## Revendications

1. Procédé de fabrication de composants en matériau renforcé par des fibres, comprenant les étapes suivantes :
- mise à disposition d'une unité de fabrication (1) destinée à appliquer un matériau renforcé par des fibres (2) sur un moule à composant (3),
- l'unité de fabrication (1) possédant un dispositif de positionnement (4) et un outil d'application (41) disposé sur celui-ci,
- le dispositif de positionnement (4) possédant plusieurs moteurs d'entraînement (9, 21, 26, 27, 28, 34, 38) commandables au moyen d'un dispositif de commande (18) pour le positionnement de l'outil d'application (41) par rapport au moule à composant (3), et
- l'unité de fabrication (1) possédant au moins deux capteurs de mesure de profil de hauteur (56, 57) avec une zone de détection (E) dirigée vers le moule à composant (3),
- application d'une première bande (B₅₁) du matériau renforcé par des fibres (2) sur le moule à composant (3),
- mesure d'un profil de hauteur (H) de telle sorte qu'au moins une partie de la première bande (B₅₁) appliquée se trouve dans la zone de détection (E) d'au moins un des capteurs de mesure de profil de hauteur (56, 57), et
- application d'une deuxième bande (B₅₂, B₆₁) du matériau renforcé par des fibres (2) sur le moule à composant (3) de telle sorte que le dispositif de commande (18) commande au moins l'un des moteurs d'entraînement (9, 21, 26, 27, 28, 34, 38) en fonction du profil de hauteur (H) mesuré, les bandes (B₅₁, B₆₁) étant appliquées dans des directions d'application (55, 55') opposées,
- deux des au moins deux capteurs de mesure de profil de hauteur (56, 57) étant disposés l'un à côté de l'autre sur l'outil d'application (41), et
- l'outil d'application (41) étant tourné de 180° par rapport au dispositif de positionnement (4) lors d'un changement de la direction d'application (55, 55').

2. Procédé selon la revendication 1, **caractérisé en ce que** le capteur de mesure de profil de hauteur (56, 57) est réalisé sous la forme d'un capteur à coupe optique et la mesure du profil de hauteur (H) s'effectue sans contact au moyen d'un procédé à coupe optique.

3. Procédé selon la revendication 1 ou 2, **caractérisé en ce que** la mesure du profil de hauteur (H) est effectuée pendant l'application de la première bande (B₅₁).

4. Procédé selon l'une des revendications 1 à 3, **caractérisé en ce qu'**une arête longitudinale (L) de la première bande (B₅₁) est détectée à l'aide du profil de hauteur (H) mesuré et la deuxième bande (B₆₁) est appliquée latéralement à côté de la première bande (B₅₁) au moyen du dispositif de positionnement (4) en fonction de l'arête longitudinale (L) détectée.

5. Procédé selon l'une des revendications 1 à 4, **caractérisé en ce qu'**un premier repère de référence (R₁) est détecté à l'aide du profil de hauteur (H) mesuré et la deuxième bande (B₆₁) est appliquée latéralement à côté de la première bande (B₅₁) au moyen du dispositif de positionnement (4) en fonction du repère de référence (R₁) détecté.

6. Procédé selon l'une des revendications 1 à 5, **caractérisé en ce qu'**une différence de hauteur (ΔH) par rapport à la première bande (B₅₁) est détectée à l'aide du profil de hauteur (H) mesuré et la deuxième bande (B₅₂) est appliquée sur la première bande (B₅₁) au moyen du dispositif de positionnement (4) en fonction de la différence de hauteur (ΔH) détectée.

7. Procédé selon l'une des revendications 1 à 6, **caractérisé en ce qu'**une différence de hauteur (ΔH) entre la première bande (B₅₁) et un deuxième repère de référence (R₂) est détectée à l'aide du profil de hauteur (H) mesuré et la deuxième bande (B₅₂) est appliquée sur la première bande (B₅₁) au moyen du dispositif de positionnement (4) en fonction de la différence de hauteur (ΔH) détectée.

8. Procédé selon la revendication 6 ou 7, **caractérisé en ce que** pendant l'application de la deuxième bande (B₅₂) au moyen du dispositif de positionnement (4), une force de pressage de l'outil d'application (41) sur le moule à composant (3) est modifiée.

9. Procédé selon l'une des revendications 6 à 8, **caractérisé en ce que** pendant l'application de la deuxième bande (B₅₂), une force de pressage de l'outil d'application (41) sur le moule à composant (3) est mesurée au moyen d'un capteur dynamométrique (40) disposé entre l'outil d'application (41) et le dispositif de positionnement (4).

10. Procédé selon l'une des revendications 1 à 9, **caractérisé en ce que** l'application des bandes (B₅₁, B₅₂, B₆₁) est effectuée en référence à un système de coordonnées absolues (K).

11. Procédé selon l'une des revendications 1 à 10, **caractérisé en ce que** pendant l'application d'une bande (B₅₁, B₅₂, B₆₁), les erreurs d'application qui se produisent pendant l'application sont détectées au moyen d'un capteur à caméra optique (58).

12. Unité de fabrication destinée à la fabrication de composants en matériau renforcé par des fibres, comprenant :
- un outil d'application (41) destiné à appliquer un matériau renforcé par des fibres (2) sur un moule à composant (3),
- un dispositif de positionnement (4) qui possède plusieurs moteurs d'entraînement (9, 21, 26, 27, 28, 34, 38) pour le positionnement de l'outil d'application (41) disposé sur celui-ci par rapport au moule à composant (3),
- au moins deux capteurs de mesure de profil de hauteur (56, 57) avec une zone de détection (E) dirigée vers le moule à composant (3), deux des au moins deux capteurs de mesure de profil de hauteur (56, 57) étant disposés l'un à côté de l'autre sur l'outil d'application (41), et
- un dispositif de commande (18) destiné à commander les moteurs d'entraînement (9, 21, 26, 27, 28, 34, 38), lequel est configuré de telle sorte que
- une première bande (B₅₁) du matériau renforcé par des fibres (2) peut être appliquée sur le moule à composant (3),
- un profil de hauteur (H) peut être mesuré de telle sorte qu'au moins une partie de la première bande (B₅₁) appliquée se trouve dans la zone de détection (E) d'au moins un des capteurs de mesure de profil de hauteur (56, 57),
- une deuxième bande (B₅₂, B₆₁) du matériau renforcé par des fibres (2) peut être appliquée sur le moule à composant (3) de telle sorte qu'au moins l'un des moteurs d'entraînement (9, 21, 26, 27, 28, 34, 38) est commandé en fonction du profil de hauteur (H) mesuré, et
- les bandes (B₅₁, B₆₁) peuvent être appliquées dans des directions d'application (55, 55') opposées, l'outil d'application (41) étant tourné de 180° par rapport au dispositif de positionnement (4) lors d'un changement de la direction d'application (55, 55').
